# EUROPÄISCHE PATENTANMELDUNG

(11) **EP 1 681 562 A1**
(43) Veröffentlichungstag der Anmeldung: **19.07.2006**
(21) Anmeldenummer: 05000843.2
(22) Anmeldetag: 17.01.2005
(51) Int. Cl.: G01N 25/72

(54) **Verfahren zur zerstörungsfreien Prüfung von mehrschichtigen Strukturen auf Unregelmässigkeiten**

(71) Anmelder: Lufthansa Technik AG, 22335 Hamburg (DE)
(72) Erfinder: Feddern, Peter, 21039 Hamburg (DE)
(74) Vertreter: Glawe, Delfs, Moll

(57) **Zusammenfassung**

Verfahren zur zerstörungsfreien Prüfung von mehrschichtigen Strukturen auf Unregelmäßigkeiten. Die mehrschichtige Struktur wird mit einer Wärmequelle angestrahlt. Dadurch erwärmt sich die mehrschichtige Struktur und gibt Wärmestrahlung ab. Diese Wärmestrahlung wird mit einer Infrarot-Kamera aufgenommen. Unregelmäßigkeiten in der mehrschichtigen Struktur können dadurch erkannt werden, dass die Wärmeleitfähigkeit von den Gegebenheiten innerhalb der mehrschichtigen Struktur abhängt. Beispielsweise ist der Wärmeübertrag schlüssig aufeinander liegender Schichten besser, als wenn es Lufteinschlüsse gibt.

## Beschreibung

Die Erfindung betrifft ein Verfahren zur zerstörungsfreien Prüfung von mehrschichtigen Strukturen auf Unregelmäßigkeiten.

Mehrschichtige Strukturen gibt es beispielsweise in Flugzeugen, wo die Außenhaut mit den inneren Strukturelementen des Rumpfs (Doppler) verklebt ist. Um die Flugsicherheit zu gewährleisten, muss in regelmäßigen Abständen überprüft werden, dass die Klebeverbindungen sich nicht gelöst haben. Dazu wurde bisher die komplette Innenausstattung des Flugzeugs entfernt. Mit einem Kunststoffspachtel wurden manuell alle Nahtstellen auf Ablösungen überprüft, indem versucht wurde, mit dem Spachtel zwischen Außenhaut und Doppler zu gelangen. Der Aufwand für die vollständige Überprüfung aller Verbindungen eines Flugzeugs betrug mehr als 1000 Arbeitsstunden. Das Flugzeug war ca. 20 Tage lang nicht einsatzfähig.

Der vorliegenden Erfindung liegt die Aufgabe zu Grunde, ein Verfahren zu entwickeln, das den Aufwand für eine solche Überprüfung erheblich reduziert.

Die Aufgabe wird erfindungsgemäß dadurch gelöst, dass die Struktur mit einer Wärmequelle angestrahlt wird, dass die von der durch die Strahlung der Wärmequelle erwärmten Struktur ausgehende Wärmestrahlung mit einer Infrarot-Kamera aufgenommen wird und dass die Wärmequelle und die Infrarot-Kamera auf derselben Seite der mehrschichtigen Struktur angeordnet werden. Die Strahlung der Wärmequelle erwärmt die mehrschichtige Struktur. Die Wärme, die zunächst nur von der angestrahlten Oberfläche der mehrschichtigen Struktur aufgenommen wird, breitet sich durch Wärmeleitung innerhalb der Struktur aus. Die Art der Wärmeausbreitung hängt wesentlich von inneren Merkmalen der Struktur ab. Der Wärmeübertrag von einer Schicht der Struktur auf die nächste ist besser, wenn die Schichten schlüssig aufeinanderliegen, als wenn es Lufteinschlüsse zwischen den Schichten gibt. Der Wärmeübertrag zwischen den Schichten ist weiterhin je besser, desto größer der Anpressdruck zwischen verschiedenen Schichten ist. Auf diese Weise entstehen Temperaturunterschiede zwischen einzelnen Bereichen der mehrschichtigen Struktur.

Mit der Infrarot-Kamera wird die von der Struktur ausgehende Wärmestrahlung aufgenommen. Durch die unterschiedliche Laufzeit der Wärmeausbreitung im Prüfgegenstand ergeben sich von Bild zu Bild Phasendifferenzen, die jedem Bild überlagert sind. Eine Auswertung dieser Aufnahmen der Wärmestrahlung erlaubt Rückschlüsse auf den inneren Zustand der Struktur. Bereiche, in denen Unregelmäßigkeiten auftreten, in den sich also die Schichten voneinander gelöst haben oder in denen der Anpressdruck zwischen den Schichten zu gering ist, werden durch die Phasendifferenzen erkannt. Die auf die Oberfläche aufgebrachte Wärme wird zum Teil von der Rückwand des Bauteils reflektiert und gelangt zurück an die Oberfläche. Dort wird dieser an der Rückwand reflektierte Anteil der Wärme mit seiner Laufzeit-/Phasendifferenz, ebenso wie die von der Oberfläche direkt reflektierte Wärme, von der Infrarot-Kamera erfasst. Befindet sich in dem Bauteil eine thermische Trennung (z.B. Delamination), ergibt sich für die reflektierte Wärme eine kleinere Laufzeit-/Phasendifferenz. Laufzeitdifferenzen ergeben sich ebenfalls bei unterschiedlichen Materialstärken, was zu einer sehr guten Anzeige von verdeckten Strukturen führt.

Wegen der Anordnung von Wärmequelle und Infrarot-Kamera auf derselben Seite der mehrschichtigen Struktur ist es nicht erforderlich, dass die Struktur von beiden Seiten zugänglich ist. Soll beispielsweise die Verklebung der Außenhaut eines Flugzeugs überprüft werden, ist es nicht erforderlich, die Innenausstattung des Flugzeugs zu entfernen.

Besonders vorteilhaft lassen sich mit dem Verfahren untersuchen, mehrschichtige Strukturen aus miteinander verklebten Schichten, mehrschichtige Strukturen aus übereinanderliegenden Metallblechen oder die Außenhaut eines Flugzeugs.

Ebenfalls vorteilhaft anwendbar ist das Verfahren, wenn die mehrschichtige Struktur Wasser aufweist. Wasser beeinflusst den Wärmeübertrag, bzw. hat eine deutlich größere Wärmekapazität als z.B. Aluminium. Dieses führt dazu, dass sowohl die eingestrahlte als auch die reflektierte Wärme im Bauteil absorbiert werden. Durch Auswertung der Aufnahmen der Wärmestrahlung können insbesondere Unregelmäßigkeiten festgestellt werden, die darin bestehen, dass Wasser beispielsweise in der Wabenstruktur des Leitwerks vorhanden ist.

Als Wärmequelle wird vorzugsweise eine Halogenlampe verwendet, deren Leistungsabgabe nur durch den Prüfgegenstand (max. Temperatur) begrenzt wird. Die Leistungsaufnahme beträgt vorzugsweise mehr als 10 kW. Prinzipiell ist jede andere Wärmequelle einsetzbar, allerdings ist die Verzögerungszeit zwischen Einschalten der Wärmequelle und der Abgabe von Wärmestrahlung bei den meisten Wärmequellen zu lang.

Vorteilhaft ist es, wenn die Infrarot-Kamera die Wärmestrahlung von einer mindestens 2 m² großen Teilfläche der mehrschichtigen Struktur aufnimmt. Je größer die Teilfläche ist, die in einem Durchgang überprüft werden kann, desto größer ist die Zeitersparnis gegenüber einer manuellen Überprüfung. Der Zeitaufwand für die vollständige Überprüfung der Verklebungen eines Flugzeugs kann so auf ca. 100 Arbeitsstunden reduziert werden. Die Größe der Prüffläche ist begrenzt durch das Auflösungsvermögen der Infrarot-Kamera, bzw. durch die Energieaufbringung der Wärmequelle.

Vorzugsweise werden von jeder der Teilflächen zwischen 200 und 1000 Aufnahmen mit der Infrarot-Kamera gemacht, und diese Aufnahmen werden mittels einer Fourier-Transformation in eine Amplituden- und eine Phasendarstellung aufgespalten. Dadurch wird erreicht, dass über einen definierten Zeitraum das Wärmeabstrahlungsverhalten der Prüffläche in Bezug auf die Anregungsfunktion erfasst wird. Vorteilhafterweise wird in erster Linie die Phasendarstellung des Ergebnisbildes ausgewertet, weil auf diese Weise die Temperatur der Prüffläche keinen Einfluss hat.

Ein großer Teil der von der Wärmequelle ausgehenden Strahlung wird an der Oberfläche der mehrschichtigen Struktur reflektiert, ohne in die Struktur eingedrungen zu sein. Dieser reflektierte Teil der Wärmestrahlung, der keine Phasenverschiebung gegenüber der Anregungsfunktion aufweist, wird von der Infrarot-Kamera aufgenommen und führt zu großen Werten in der Phasendarstellung.

Die Werte in der Phasendarstellung, die den in die mehrschichtige Struktur eingedrungenen und gegenüber der Anregungsfunktion phasenverschobenen Anteil der Wärmestrahlung repräsentieren, sind im Vergleich klein. Um das Auflösevermögen der Auswertung zu erhöhen, kann es vorteilhaft sein, die Auswertung auf diesen gegenüber der Anregungsfunktion phasenverschobenen Teil Phasendarstellung zu konzentrieren.

Die Leistungsabgabe der Wärmequelle wird variabel gesteuert, wobei die Ansteuerungsfunktion beispielsweise Sinus-, Dreieck- oder Rechteckform haben kann. Die Frequenz der Ansteuerungsfunktion ist vorteilhafterweise kleiner als 0,1 Hz, und die Frequenz wird an die Dicke der mehrschichtigen Struktur angepasst. Durch die unterschiedlichen Ansteuerungsfunktionen können unterschiedliche Eigenschaften der Prüfgegenstände berücksichtigt werden.

Das erfindungsgemäße Verfahren wird im Folgenden anhand einer vorteilhaften Ausführungsform beispielhaft beschrieben. Es zeigt:

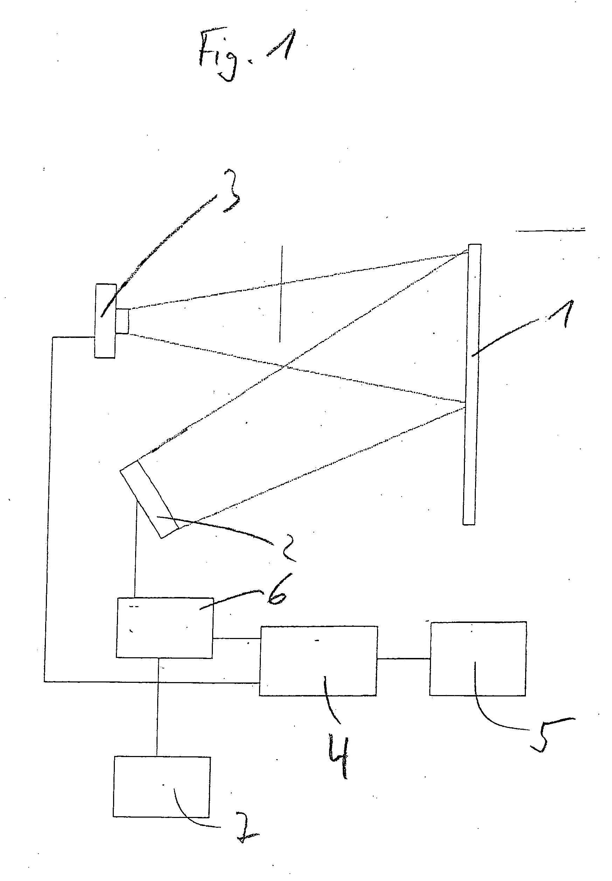

Fig. 1 eine schematische Darstellung des erfindungsgemäßen Verfahrens.

Eine mehrschichtige Struktur 1 wird angestrahlt von einer Wärmequelle 2. Eine Infrarot-Kamera 3 nimmt die Wärmestrahlung von der angestrahlten Teilfläche der mehrschichtigen Struktur 1 auf. Das Ausgangssignal der Infrarot-Kamera 3 wird in einem Systemprozessor 4 verarbeitet. Der Systemprozessor 4 spaltet die Aufnahmen der Infrarot-Kamera in eine Phasen- und eine Amplitudendarstellung auf. Diese beiden Darstellungen können auf dem Monitor 5 betrachtet werden.

Die Leistungsabgabe der Wärmequelle 2 wird über ein Leistungsteil 6 gesteuert. Das Leistungsteil 6 wird über den Netzanschluss 7 mit Kraftstrom versorgt und erhält sein Steuersignal aus dem Systemprozessor 4. Im Systemprozessor 4 erfolgt die Triggerung von Wärmequelle 2 und Infrarot-Kamera 3, so dass jedem Zeitpunkt auf der Anregungsfunktion ein Infrarotbild zugeordnet werden kann.

## Patentansprüche

1. Verfahren zur zerstörungsfreien Prüfung von mehrschichtigen Strukturen auf Unregelmäßigkeiten, **dadurch gekennzeichnet, dass** die Struktur (1) mit einer Wärmequelle (2) mit variabler Leistung angestrahlt wird, dass die von der durch die Strahlung der Wärmequelle (2) erwärmten Struktur (1) ausgehende Wärmestrahlung mit einer Infrarot-Kamera (3) aufgenommen wird und dass die Wärmequelle (2) und die Infrarot-Kamera (3) auf derselben Seite der mehrschichtigen Struktur angeordnet werden.

2. Verfahren nach Anspruch 1 **dadurch gekennzeichnet, dass** eine mehrschichtige Struktur (1) aus miteinander verklebten Schichten untersucht wird.

3. Verfahren nach Anspruch 1 oder 2 **dadurch gekennzeichnet, dass** eine mehrschichtige Struktur (1) aus aufeinander liegenden Metallblechen untersucht wird.

4. Verfahren nach einem der Ansprüche 1 bis 3 **dadurch gekennzeichnet, dass** die Außenhaut eines Flugzeugs untersucht wird.

5. Verfahren nach einem der Ansprüche 1 bis 4 **dadurch gekennzeichnet, dass** die Schichten der mehrschichtigen Struktur (1) auf Anwesenheit von Wasser untersucht werden.

6. Verfahren nach Anspruch 5 **dadurch gekennzeichnet, dass** die Anwesenheit von Wasser in den Waben des Leitwerks eines Flugzeugs überprüft wird.

7. Verfahren nach einem der Ansprüche 1 bis 6 **dadurch gekennzeichnet, dass** als Wärmequelle (2) eine Halogenlampe verwendet wird.

8. Verfahren nach Anspruch 7 **dadurch gekennzeichnet, dass** eine Halogenlampe mit einer Leistungsaufnahme von mehr als 10 kW verwendet wird.

9. Verfahren nach einem der Ansprüche 1 bis 6 **dadurch gekennzeichnet, dass** als Wärmequelle (2) ein Infrarot-Strahler verwendet wird.

10. Verfahren nach einem der Ansprüche 1 bis 9 **dadurch gekennzeichnet, dass** die Infrarot-Kamera (3) die Wärmestrahlung von einer mindestens 2 m² großen Teilfläche der mehrschichtigen Struktur (1) aufnimmt.

11. Verfahren nach einem der Ansprüche 1 bis 10 **dadurch gekennzeichnet, dass** von jeder Teilfläche der mehrschichtigen Struktur mindestens 200 Aufnahmen mit der Infrarot-Kamera (3) gemacht werden.

12. Verfahren nach einem der Ansprüche 1 bis 11 **dadurch gekennzeichnet, dass** die Ansteuerungsfunktion für die Leistungsaufnahme der Wärmequelle (2) Sinus-, Dreieck- oder Rechteckform hat.

13. Verfahren nach Anspruch 12 **dadurch gekennzeichnet, dass** die Frequenz der Ansteuerungsfunktion kleiner als 0,1 Hz ist.

14. Verfahren nach Anspruch 12 oder 13 **dadurch gekennzeichnet, dass** die Frequenz der Ansteuerungsfunktion an die Dicke der mehrschichtigen Struktur angepasst wird.

15. Verfahren nach einem der Ansprüche 1 bis 14, **dadurch gekennzeichnet, dass** die Aufnahmen der Infrarot-Kamera (3) mittels einer Fourier-Transformation in eine Amplituden- und eine Phasendarstellung aufgespalten werden.

16. Verfahren nach Anspruch 15, **dadurch gekennzeichnet, dass** die Phasendarstellung ausgewertet wird und dass die Auswertung auf die Bereiche der Phasendarstellung konzentriert wird, die den gegenüber der Anregungsfunktion phasenverschobenen Teil der Wärmestrahlung repräsentieren.
